(19) Europäisches Patentamt
European Patent Office
Office européen des brevets

(11) **EP 1 268 230 B1**

(12) **EUROPEAN PATENT SPECIFICATION**

(45) Date of publication and mention
of the grant of the patent:
**21.09.2005 Bulletin 2005/38**

(51) Int Cl.⁷: **B60K 41/02**

(21) Application number: **01916036.5**

(22) Date of filing: **23.03.2001**

(86) International application number:
**PCT/SE2001/000631**

(87) International publication number:
**WO 2001/072546 (04.10.2001 Gazette 2001/40)**

(54) **METHOD AND APPARATUS FOR INDICATION OF CLUTCH SLIP**

VERFAHREN UND VORRICHTUNG ZUR ANZEIGUNG EINES SCHLUPFZUSTANDS

PROCEDE ET APPAREIL DESTINES A INDIQUER UN GLISSEMENT

(84) Designated Contracting States:
**DE FR GB IT**

(30) Priority: **27.03.2000 SE 0001058**

(43) Date of publication of application:
**02.01.2003 Bulletin 2003/01**

(73) Proprietor: **Scania CV AB (publ)**
**151 87 Södertälje (SE)**

(72) Inventor: **BOSTRÖM, Richard**
**S-155 30 Nykvarn (SE)**

(74) Representative: **Waldebäck, Hans Olov**
**Scania CV AB**
**Patents, TY**
**151 87 Södertälje (SE)**

(56) References cited:
**US-A- 4 651 142**      **US-A- 5 902 211**

## Description

TECHNICAL FIELD

The present invention relates to a method and an arrangement in accordance with the preambles to patent claims 1 and 12 respectively. The invention also refers to a vehicle equipped with such an arrangement. The features defined in the preambes of claims 1 and 12 belong to the common knowledge of the skilled person.

STATE OF THE ART

When driving a combustion engine powered vehicle of the kind which has a manual mechanical gearbox and a mechanical clutch, e.g. of disc type, the moving-off sequence is particularly problematical with regard to clutch wear. In the case of an inexperienced or unobservant driver, incorrect action when putting the vehicle into motion may very well lead to this wear becoming very severe. In extreme cases, just one move-off sequence in which the driver applies too much acceleration, causing excessive engine speed and torque, and selects the wrong gear, may lead to, in principle, complete burning out of clutch linings.

It is generally the case that clutch engagement entails matching the speeds of rotation of the respective parts of the clutch and the elements belonging to them, and the energy represented by the speed difference has to be transferred from the side of the clutch part which has the higher speed to the side with the lower speed, and/or be released as friction heat. Moving off from zero does of course require energy from the engine and the flywheel being as far as possible converted into kinetic energy for the vehicle.

The problem is particularly troublesome in a diesel engine powered heavy vehicle, e.g. a truck, since this case involves high vehicle weights which cause the clutch to be subject to high torque. It may be appreciated that heavy vehicles with total weights sometimes exceeding 50 tonnes may require very large amounts of energy to set them in motion. This encourages the driver to run the engine up before moving off, in line inter alia with drivers' inherent endeavour to avoid problems of generally too little power supply, moving off on upgrades, vehicle running backwards and the risk of engine stalling when too little acceleration is applied. However, excessive engine speed, particularly in relation to the gear engaged, causes the abovernentioned clutch problem.

Excessive clutch wear causes a not negligible extra cost to the vehicle owner, not only in terms of direct costs of clutch replacement and repairs but also because of consequent indirect costs of vehicle standstill.

US-A-4 651 142 refers to an arrangement for protecting a clutch from overheating. The arrangement described in that specification uses, inter alia, information on the rotation speeds of the two clutch parts to calculate the energy which is expected to be released in the clutch. This requires the use of sensors to provide information on the rotation speed of the output part of the clutch or on which gear, or gears in the case of a multi-stage gearbox, is/are engaged in the gearbox, for reverse-direction calculation of said rotation speed.

A serious problem of that known arrangement lies precisely in the fact that it requires along the driveline further sensors which are undesirable because of complicating the system and are not normally present in a large proportion of today's heavy vehicles. Thus that arrangement is in principle usable only after installing such sensors, or in vehicles in which such sensors are for any reason already present.

OBJECTS AND MOST IMPORTANT FEATURES OF THE INVENTION

It is an object of the present invention to provide a solution whereby the problem with the state of the art can be eliminated, which solution is also applicable in a substantially broad range of vehicles.

This object is achieved with a method and an arrangement of the kind mentioned in the introduction by the features of the patent claims 1 and 12 respectively.

Further details are part of the dependent claims.

The result is that the energy released in the clutch while it is slipping can be calculated by simple means on the basis of signals received from sensors which are already present in most heavy vehicles.

It should be mentioned that even an experienced driver who, for example, switches to a vehicle which is new to him/her risks causing high clutch wear because unfamiliarity with different engine noise, accelerator position/engine speed position etc. greatly alters the whole driving situation. In this respect it is important to bear in mind that in modem vehicles of the kind in which the invention is intended to be applied it may be very difficult even for an experienced driver, even after long experience of the specific vehicle, to gain a correct picture of the parameters which influence clutch wear. Thus not even long experience will guarantee a driver handling the vehicle in an acceptable manner, since the clutch overload problem is aggravated by the fact that modem vehicles of the kind here referred to do not give the driver clear overload indications. In contrast, the invention results in the driver's attention being drawn directly to abnormal clutch wear while driving, particularly when setting the vehicle in motion, thereby creating a rapid and correct learning effect which quickly makes it possible to adapt to the specific vehicle and avoid abnormal clutch wear.

The relationship between engine speed and vehicle speed can easily be calculated by combining signals which exist in the vehicle. This is done with advantage at short intervals of time, e.g. between half a second and a few tenths of a second. Other intervals may also arise and as short an interval as possible is desirable.

Changes in the calculated relationship are recorded and evaluated over time. It is thus possible on the basis of the trend over time to infer prevailing running data and hence calculate the speed of the output part of the clutch. The energy released in the clutch is then calculated therefrom by an appropriate method.

It may be mentioned that clutch wear is in principle proportional to the square of the speed difference (known as slip) between the clutch parts, so each reduction in this speed difference causes an advantageous reduction of wear and hence longer clutch lining life, longer periods between clutch renewals and shorter vehicle standstill times.

A common error by inexperienced drivers when moving off is to engage too high a gear with too high engine speed. The invention effectively draws drivers' attention to this incorrect handling of the vehicle and enables them to correct their driving style when moving off on subsequent occasions.

A preferred aspect of the invention results in the value of the relationship being compared with stored data values pertaining to the gearbox's various gears. When the relationship is established to be approaching one of these stored values, this is related to a certain gear being engaged, from which it is possible to determine the prevailing speed of the output part of the clutch. The energy released may then be calculated on the basis of the energy supplied from the engine less the energy which is "carried off" via the rest of the driveline.

According to an alternative or further preferred method, the relationship is derived as a function of time, whereby it may easily be observed that clutch slip ceases when the derivative approaches zero. For greater reliability, this method is preferably combined with an evaluation of how much the relationship differs from the nearest gearchange value in the gearbox which is stored in the memory.

It should be emphasised that the invention is also applicable in semi-automatic systems such as servo-assisted mechanical gearboxes, and in servo-assisted clutches.

## BRIEF DESCRIPTION OF THE DRAWINGS

Further advantages and features of the invention are indicated by the following description of embodiments with reference to the drawings, in which:

Fig. 1a depicts a flowchart of a method according to a first embodiment of the invention,

Fig. 1b depicts a flowchart of a method according to a second embodiment of the invention, and

Fig. 2 depicts schematically a driveline for a vehicle equipped according to the invention.

## DESCRIPTION OF EMBODIMENTS

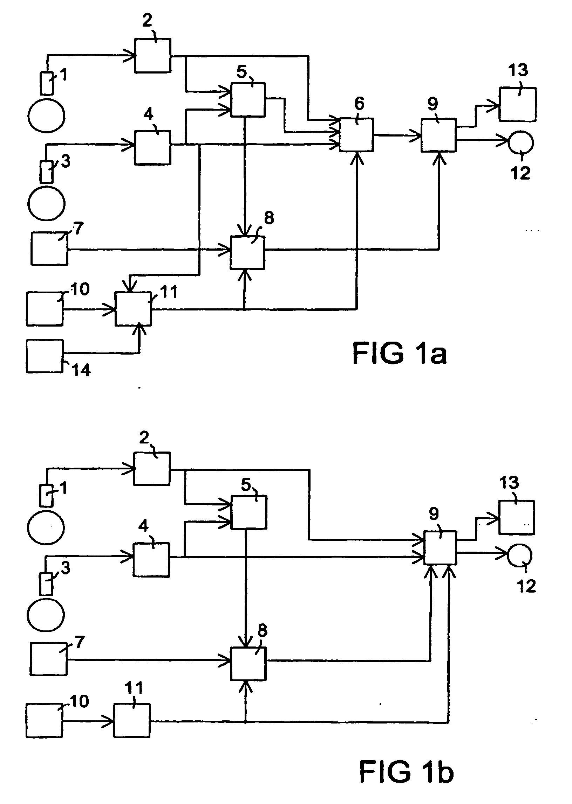

Fig. 1a depicts schematically a flowchart of a method according to the invention which indicates clutch slip in a manually controlled friction clutch in a vehicle with manually controlled mechanical gearbox. The vehicle in this example takes the form of a combustion engine powered heavy-duty vehicle such as a diesel engine powered truck or a bus. Reference 1 denotes a detector for detecting the speed of the gearbox output shaft or the propeller shaft. Signals from this detector are converted in reference 2 to values representing, in principle, the vehicle's instantaneous speed or the output shaft's instantaneous angular speed. A detector 3 is further designed to deliver signals describing the engine speed, which are converted in reference 4 to an instantaneous value thereof.

Reference 5 combines the values from references 2 and 4 to calculate, at least substantially continuously, a relationship between the engine speed and the vehicle speed. The values from references 2 and 4 are also stored in an intermediate memory 6 during the period when slip takes place. This memory also effects intermediate storage of engine torque values (see below). These values are used later, when the slip has ceased, for calculating the slip energy developed in the clutch.

A memory 7 has been fed beforehand with transmission ratio values for the various possible gear combinations in the vehicle's gearbox(es). Reference 8 compares the value received from reference 5 with the stored values in the memory 7, and when the value of the calculated relationship is established to be approaching a stored value and the difference is less than a certain predetermined difference for a specified period of time, it is established that the clutch slip has ceased.

Reference 10 denotes a signal from the engine's control system which indicates the engine torque based on the fuel quantity injected. Reference 11 forms a torque value which is led to and stored in the memory 6 as above.

When the clutch has ceased to slip and the system has decided which gear is engaged, the data stored on an intermediate basis in the memory 6 are used for calculating in reference 9 the slip energy released in the clutch. In principle, this involves an expression for instantaneous torque being multiplied by the relating slip value and being integrated over time until it is established that the clutch has been engaged and the slip has ceased. The value thus obtained describes the amount of energy released in the clutch. When the energy amount established exceeds a predetermined limit value, an attention-drawing signal represented by a lamp 12 is activated.

The occurrence of the lamp signal 12 represents an effective instructional facility for drivers, providing them with technical support for modifying their driving behaviour, particularly the way they handle the clutch, towards causing less wear.

As an alternative to the embodiment depicted in Fig. 1a with values representing the engine torque, engine speed and vehicle speed being stored on an intermediate basis in the intermediate memory 6 during the period when slip takes place, it is instead possible to summate continuously the product arrived at by multiplying the total energy supplied at the time of each measurement by a preliminary value representing the "useful energy", likewise at the time of each measurement:

$$W_{in} - W_{out} = M \times \omega_{engine} \times \Delta t - M \times i \times \omega_{propshaft} \times \Delta t$$

where M = net torque
    i = transmission ratio

The first term is calculated for the slip period and is summated continuously. In the second term of the formula, "i" may be removed and

$W_{prel} = M \times \omega_{propshaft} \times \Delta t$ be calculated for the slip period and be summated continuously, i.e. right up to when the end of the slip period is established by any of the methods herein described. When this has been done and the transmission ratio has thus become known, $W_{out}$ may be calculated by multiplying the total obtained by the "i" value obtained. The advantage of this method is that no intermediate storage of data is necessary and a simpler system can therefore be used. A flowchart working according to this alternative method is depicted in Fig. 1b, in which the only obvious difference in this respect as compared with Fig. 1a is absence of the memory 6 and the fact that the signals are instead led directly to reference 9 where the relevant calculation takes place.

The same method can also be applied so that cessation of clutch slip is established when the derivative of the value of said relationship as a function of time differs from zero by certain maximum amount. In this case it is possible, as in the calculation indicated previously, for later values or mean values of them to be compared with earlier values or mean values of them. As suggested above, it is advantageous for this method to be combined with an evaluation of the difference between the relationship and the nearest gearchange value.

It is preferred that information on energy released in the clutch over time be stored in a memory 13. This makes it easy to extract the vehicle's status and possibly also the specific driver's history, as regards clutch wear.

The engine torque calculation in reference 11 preferably involves compensating for the engine's slippage/friction torque and/or for peripheral equipment belonging to the vehicle, with a view to calculating a net torque. This net torque is then used for calculations of energy released in the clutch, resulting in a more reliable value. Typically the compensating portion is measured beforehand for various engine speeds and stored in the memory, reference 14 in Fig. 1, but may also depend on whether, for example, air conditioning, fans etc. are running.

By a modification of the method it is also possible to ensure that the attention-drawing signal is delivered, while clutch slip is taking place, when the calculated total energy supplied from the engine exceeds a predetermined value. The driver thus receives early warning to enable him/her to interrupt an incorrect clutch sequence. In this case the product of engine speed x engine net torque x Δt is calculated during slip from standstill. This product is summated for as long as the engine slips.

It is also possible for the clutch slip to be regarded as having ceased when the absolute amount of the net torque is below a certain specified amount.

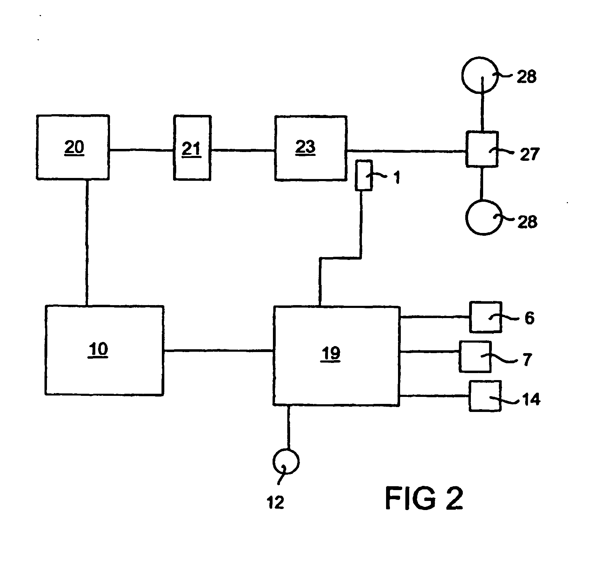

Fig. 2 depicts schematically the control system 19, which advantageously incorporates a system according to invention integrated into or connected to the normal engine control system. In the driveline, the engine is denoted by reference 20, the clutch by 21 and the gearbox by 23, while a speed sensor (detector) for the gearbox output speed, similar to that described above, is denoted by reference 1. The gearbox output shaft is connected to a final gear 27 which is connected in its turn to the vehicle's powered wheels 28.

Figure 2 also shows the control system 19 communicating with the control system of the engine 20 in order to receive signals describing the engine speed and the engine torque, with the sensor 1 for the speed of the gearbox output shaft in order to obtain signals describing the vehicle speed, and with the memories 6, 7 and 14 (see above). It also communicates with the lamp 12.

The invention means that in a vehicle equipped according to the invention a driver can be warned of clutch handling likely to cause excessive clutch wear. The driver can be provided with important information on the state of the clutch which would otherwise be difficult to apprehend during normal driving, at least for an inexperienced driver. An important advantage of the invention is that the system is simple and inexpensive and can be applied to vehicles which have been chosen by the haulage contractor for minimised running costs and are not equipped with sophisticated but expensive automatic gear systems. The invention also achieves its object even in certain such automatic systems.

**Claims**

1.  Method for indication of clutch slip in a manually controlled friction clutch (21) in a vehicle with manually controlled mechanical gearbox (23),

    a) whereby a value representing the energy released in the clutch is calculated from an expression for the torque of the engine (20) and an expression for clutch slip,

b) the torque being calculated on the basis of the fuel quantity (11) supplied to the engine, and

c) whereby an attention-drawing signal to the driver of the vehicle is delivered when the calculated energy released in the clutch exceeds a certain predetermined level, **characterised in**

d) that the relationship between the engine's speed and the vehicle's speed is at least substantially continuously calculated,

e) that the change in the value of this relationship over time is recorded,

f) that the change in the relationship is used for establishing the occurrence or non-occurrence of clutch slip,

gg) and that the amount of the relationship is used for calculating the magnitude thereof by the following steps:

g) the value of said relationship is compared with stored values (7) representing various gear changes in the gearbox (23) for estimating which gear is engaged in the gearbox and which is used together with the vehicle speed for estimating the speed of the outgoing part of the clutch and the energy carried off via the vehicle's driveline

h) the energy delivered from the engine is calculated from instantaneous values for the engine torque and the engine speed during the clutch slip, and

i) the slip energy is calculated as the difference between the energy delivered from the engine and the energy carried off via the vehicle's driveline.

2. Method according to claim 1, **characterised in that** cessation of clutch slip is established when the value of said relationship matches one of said stored values corresponding to a certain gear change.

3. Method according to claim 2, **characterised in that** information on said certain gear change is used for calculating the magnitude of the clutch slip.

4. Method according to claim 1, **characterised in that** cessation of clutch slip is established when the derivative of the value of said relationship as a function of time differs from zero by a certain maximum amount.

5. Method according to any one of the foregoing claims, **characterised in that** information on energy released in the clutch is stored in a memory (13).

6. Method according to any one of the foregoing claims, **characterised in that** the attention-drawing signal is delivered, after cessation of clutch slip.

7. Method according to any one of claims 1 - 6, **characterised in that** the attention-drawing signal is delivered, while clutch slip is taking place.

8. Method according to any one of the foregoing claims, **characterised in that** the engine torque calculation involves compensating (14) for the engine's slippage/friction torque and/or for peripheral equipment belonging to the vehicle, with a view to calculating a net torque.

9. Method according to claim 8, **characterised in that** clutch slip is regarded as having ceased when the absolute amount of the net torque is below a certain specified amount.

10. Method according to any one of claims 1 - 9, **characterised in that** instantaneous parameter values for rotation speed and torque are stored on an intermediate basis (6) during slip, for use in slip energy calculation after the cessation of slip has been established.

11. Method according to any one of claims 1 - 10, **characterised in that**, during slip, instantaneous values for energy arising from the engine ($W_{in}$) and preliminary values for energy carried off via the vehicle's driveline ($W_{prel}$) are summated for use in slip energy calculation when cessation of slip has been established.

12. Arrangement for indication of clutch slip in a manually controlled friction clutch (21) in a vehicle with manually controlled mechanical gearbox (23), including

a) a device for calculating a value representing the energy released in the clutch (21) on the basis of an expression for the torque of the engine (20) and clutch slip, and

b) devices (9,12) for generating an attention-drawing signal when the calculated energy released exceeds a certain predetermined level, **characterised by**

c) a calculating device (5) for at least substantially continuously calculating the relationship between the engine's speed (3,4) and the vehicle's speed (1,2),

d) devices (5,6,8) recording the change over time in the value of this relationship,

e) devices (9,12) establishing the occurrence or non-occurrence of clutch slip from values of this relationship,

f) a device (8) comparing the values of said relationship with values stored in a memory (7) which represent various gear changes in the gearbox (23) to estimate which gear is engaged in the gearbox (23),

g) a device estimating the speed of the outgoing part of the clutch from values representing vehicle speed (3,4) and the engaged gear and for estimating the energy carried off via the vehicle driveline,

h) a further device calculating the energy delivered from the engine (20) from instantaneous values representing engine torque (10, 11) and engine speed (3,4) during clutch slip, and

i) a further device calculating the slip energy as the difference between the energy delivered from the engine and the energy carried via the vehicle's driveline.

13. Arrangement according to claim 12 or 13, **characterised by** a memory (13) storing information on energy released in the clutch.

14. Arrangement according to any one of claims 12 - 13, **characterised by** a device (12) delivering the attention-drawing signal, after cessation of clutch slip.

15. Arrangement according to any one of claims 12 - 14, **characterised by** a device delivering the attention-drawing signal (12), while clutch slip is taking place.

16. Diesel engine powered vehicle with a manually controlled clutch and a mechanical gearbox, **characterised by** incorporating an arrangement according to any one of claims 12-15.

**Patentansprüche**

1. Verfahren zum Anzeigen eines Kupplungsschlupfes in einer manuell gesteuerten Reibungskupplung (21) in einem Fahrzeug mit einem manuell betätigten mechanischen Getriebe (23),

a) wobei ein Wert, der die in der Kupplung freigesetzte Energie wiedergibt, aus einem Ausdruck für das Drehmoment des Motors (20) und einem Ausdruck für den Kupplungsschlupf berechnet wird,

b) wobei das Drehmoment auf Grundlage der dem Motor zugeführten Kraftstoffmenge (11) berechnet wird und

c) wobei an den Fahrer des Fahrzeugs ein Aufmerksamkeit erregendes Signal ausgegeben wird, wenn die berechnete, in der Kupplung freigegebene Energie einen vorbestimmten Wert übersteigt,

**dadurch gekennzeichnet**,

d) dass das Verhältnis zwischen der Motordrehzahl und der Fahrzeuggeschwindigkeit zumindest im Wesentlichen kontinuierlich berechnet wird,

e) dass die Veränderung des Wertes dieses Verhältnisses über der Zeit aufgezeichnet wird,

f) dass die Veränderung des Verhältnisses dafür verwendet wird, um festzustellen, ob ein Kupplungsschlupf auftritt oder nicht auftritt, gg) und dass der Wert des Verhältnisses zum Berechnen seiner Größe anhand der folgenden Schritte verwendet wird:

g) der Wert des Verhältnisses wird mit gespeicherten Werten (7) verglichen, die verschiedene Gangstufen in dem Getriebe (23) wiedergeben, um abzuschätzen, welcher Gang in dem Getriebe eingelegt ist und welcher zusammen mit der Fahrzeuggeschwindigkeit verwendet wird, um die Drehzahl des Abtriebsteils der Kupplung und die über den Antriebsstrang des Fahrzeugs abgetragene Energie abzuschätzen,

h) die von dem Motor abgegebene Energie wird aus Momentanwerten für das Motordrehmoment und die Motordrehzahl während des Kupplungsschlupfes berechnet, und

i) die Schlupfenergie wird als Differenz zwischen der von dem Motor abgegebenen Energie und der über den Fahrzeugantriebsstrang abgetragenen Energie berechnet.

2. Verfahren nach Anspruch 1, **dadurch gekennzeichnet, dass** ein Ende des Kupplungsschlupfes festgestellt wird, wenn der Wert des Verhältnisses zu einem der gespeicherten Werte passt, die einer bestimmten Gangstufe entsprechen.

3. Verfahren nach Anspruch 2, **dadurch gekennzeichnet, dass** Informationen über die bestimmte Gangstufe zum Berechnen der Größe des Kupplungsschlupfes verwendet wird.

4. Verfahren nach Anspruch 1, **dadurch gekennzeichnet, dass** das Ende des Kupplungsschlupfes festgestellt wird, wenn die Ableitung des Wertes des Verhältnisses als Funktion der Zeit von 0 um einen bestimmten Maximalbetrag abweicht.

5. Verfahren nach einem der vorangehenden Ansprüche, **dadurch gekennzeichnet, dass** Informationen über die in der Kupplung freigesetzte Energie in einem Speicher (13) gespeichert werden.

6. Verfahren nach einem der vorangehenden Ansprüche, **dadurch gekennzeichnet, dass** das Aufmerksamkeit erregende Signal nach einem Ende des Kupplungsschlupfes ausgegeben wird.

7. Verfahren nach einem der Ansprüche 1-6, **dadurch gekennzeichnet, dass** das Aufmerksamkeit erregende Signal ausgegeben wird, während Kupplungsschlupf vorliegt.

8. Verfahren nach einem der vorangehenden Ansprüche, **dadurch gekennzeichnet, dass** die Berechnung des Motordrehmoments eine Kompensation (14) des Motorschlupfes/ Reibungsdrehmoments und/oder von zu dem Fahrzeug gehörender peripherer Zusatzausrüstung hinsichtlich einer Berechnung eines Nettodrehmoments umfasst.

9. Verfahren nach Anspruch 8, **dadurch gekennzeichnet, dass** der Kupplungsschlupf dann als beendet angesehen wird, wenn der Absolutwert des Nettodrehmoments unterhalb eines bestimmten spezifischen Wertes liegt.

10. Verfahren nach einem der Ansprüche 1-9, **dadurch gekennzeichnet, dass** gegenwärtige Parameterwerte für die Drehzahl und das Drehmoment während des Schlupfes auf vorübergehender Basis (6) gespeichert werden, um in einer Schlupfenergieberechnung verwendet zu werden, nachdem das Ende des Schlupfes festgestellt wurde.

11. Verfahren nach einem der Ansprüche 1-10, **dadurch gekennzeichnet, dass** während eines Schlupfes gegenwärtige Werte für die vom Motor herrührende Energie ($W_{in}$) und vorläufige Werte für die über den Fahrzeugantriebsstrang abgetragene Energie ($W_{prel}$) für eine Verwendung bei einer Schlupfenergieberechnung zusammengezählt werden, wenn ein Ende des Schlupfes festgestellt wurde.

12. Anordnung zum Anzeigen eines Kupplungsschlupfes in einer manuell gesteuerten Reibungskupplung (21) in einem Fahrzeug mit einem manuell betätigbaren mechanischen Getriebe (23), umfassend:

    a) eine Vorrichtung zum Berechnen eines Wertes, der die in der Kupplung (21) freiwerdende Energie repräsentiert auf Grundlage eines Ausdrucks für das Drehmoment des Motors (20) und des Kupplungsschlupfes, und
    b) Vorrichtungen (9, 12) zum Erzeugen eines Aufmerksamkeit erregenden Signals, wenn die berechnete freigesetzte Energie einen vorbestimmten Wert übersteigt,
    **gekennzeichnet durch**
    c) eine Berechnungsvorrichtung (5), um zumindest im Wesentlichen kontinuierlich das Verhältnis zwischen der Motordrehzahl (3, 4) und der Fahrzeuggeschwindigkeit (1, 2) zu berechnen,
    d) Vorrichtungen (5, 6, 8), die eine Veränderung über der Zeit des Wertes dieses Verhältnisses aufzeichnen,
    e) Vorrichtungen (9, 12), die das Auftreten oder ein Nichtauftreten von Kupplungsschlupf aus den Werten dieses Verhältnisses feststellen,
    f) eine Vorrichtung (8), die die Werte des Verhältnisses mit in einem Speicher (7) gespeicherten Werten vergleicht, die verschiedene Gangstufen in dem Getriebe (23) wiedergeben, um abzuschätzen, welcher Gang in dem Getriebe (23) eingelegt ist,
    g) eine Vorrichtung, die die Drehzahl des Abtriebsteils der Kupplung aus Werten abschätzt, die die Fahrzeuggeschwindigkeit (3, 4) und den eingelegten Gang wiedergeben, und die die über den Fahrzeugantriebsstrang abgetragene Energie abschätzt,
    h) eine weitere Vorrichtung, die die von dem Motor (20) abgegebene Energie aus das Motordrehmoment (10, 11) wiedergebenden Momentanwerten und der Motordrehzahl (3, 4) während des Kupplungsschlupfes berechnet und
    i) eine weitere Vorrichtung, die die Schlupfenergie als die Differenz zwischen der von dem Motor abgegebenen Energie und der über den Fahrzeugantriebsstrang abgetragenen Energie berechnet.

13. Anordnung nach Anspruch 12 oder 13, **gekennzeichnet durch** einen Speicher (13) zum Speichern von Informationen über die in der Kupplung freigesetzte Energie.

14. Anordnung nach einem der Ansprüche 12-13, gezeichnet durch eine Vorrichtung (12), die das Aufmerksamkeit erregende Signal nach einem Ende des Kupplungsschlupfes abgibt.

15. Anordnung nach einem der Ansprüche 12-14, **gekennzeichnet durch** eine Vorrichtung, die das Aufmerksamkeit erregende Signal (12) abgibt, während der Kupplungsschlupf stattfindet.

16. Von einem Dieselmotor angetriebenes Fahrzeug mit einer manuell gesteuerten Kupplung und einem mechanischen Getriebe, **gekennzeichnet durch** eine Anordnung gemäß einem der Ansprüche 12-15.

**Revendications**

1. Procédé d'indication d'un glissement dans un embrayage à friction à commande manuelle (21), dans un véhicule ayant une boîte de vitesse mécanique à commande manuelle (23), par lequel :

    a) une valeur représentant l'énergie produite dans l'embrayage est calculée à partir d'une expression concernant le couple du moteur (20) et d'une expression concernant le glissement de l'embrayage,

b) le couple étant calculé en fonction de la quantité de carburant (11) qui est envoyée au moteur, et

c) un signal attirant l'attention, destiné au conducteur du véhicule, est émis lorsque la valeur calculée pour l'énergie produite dans l'embrayage excède un certain niveau prédéterminé ;

   **caractérisé en ce que** :

d) la relation entre la vitesse du moteur et la vitesse du véhicule est calculée d'une manière au moins essentiellement continue ;

e) les variations dans le temps de la valeur de cette relation sont enregistrées ;

f) les variations de la relation sont utilisées pour établir la survenue ou la non survenue d'un glissement de l'embrayage ; et

gg) la valeur de la relation est utilisée pour calculer l'importance de ce glissement, par les étapes suivantes, dans lesquelles :

g) la valeur de ladite relation est comparée à des valeurs mémorisées (7) représentant différents changements de rapport dans la boîte de vitesse (23), pour estimer quel rapport est engagé dans la boîte de vitesse, et lequel est utilisé, en association avec la vitesse du véhicule, pour estimer la vitesse de la partie aval de l'embrayage et l'énergie transmise par la ligne de transmission du véhicule ;

h) l'énergie délivrée par le moteur est calculée à partir de valeurs instantanées du couple du moteur et de la vitesse du moteur pendant le glissement de l'embrayage ; et

i) l'énergie de glissement est calculée comme la différence entre l'énergie délivrée par le moteur et l'énergie transmise par la ligne de transmission du véhicule.

2. Procédé selon la revendication 1, **caractérisé en ce que** l'arrêt du glissement de l'embrayage est établi lorsque la valeur de ladite relation correspond à l'une desdites valeurs mémorisées, correspondant à un certain changement de rapport dans la boîte de vitesse.

3. Procédé selon la revendication 2, **caractérisé en ce que** des informations concernant ledit certain changement de rapport dans la boîte de vitesse sont utilisées pour calculer l'importance du glissement de l'embrayage.

4. Procédé selon la revendication 1, **caractérisé en ce que** l'arrêt du glissement de l'embrayage est établi lorsque la dérivée de la valeur de ladite relation en fonction du temps diffère de zéro d'une certaine quantité maximale.

5. Procédé selon l'une quelconque des revendications précédentes, **caractérisé en ce que** des informations concernant l'énergie produite dans l'embrayage sont mémorisées dans une mémoire (13).

6. Procédé selon l'une quelconque des revendications précédentes, **caractérisé en ce que** le signal attirant l'attention est émis après l'arrêt du glissement de l'embrayage.

7. Procédé selon l'une quelconque des revendications 1 à 6, **caractérisé en ce que** le signal attirant l'attention est émis pendant la survenue du glissement de l'embrayage.

8. Procédé selon l'une quelconque des revendications précédentes, **caractérisé en ce que** le calcul du couple du moteur met en jeu la compensation (14) du couple de glissement/friction du moteur et/ou des équipements périphériques appartenant au véhicule, en vue de calculer un couple net.

9. Procédé selon la revendication 8, **caractérisé en ce que** le glissement de l'embrayage est considéré comme ayant cessé lorsque la valeur absolue du couple net est inférieure à une certaine valeur spécifiée.

10. Procédé selon l'une quelconque des revendications 1 à 9, **caractérisé en ce que** les valeurs paramètres instantanées pour la vitesse de rotation et le couple sont mémorisées de manière temporaire (6) pendant le glissement, pour être utilisées pour le calcul l'énergie de glissement après que l'arrêt du glissement a été établi.

11. Procédé selon l'une quelconque des revendications 1 à 10, **caractérisé en ce que**, pendant le glissement, les valeurs instantanées pour l'énergie provenant du moteur ($W_{in}$) et les valeurs préliminaires pour l'énergie transmise par la ligne de transmission du véhicule ($W_{prél}$) sont additionnées pour être utilisées pour le calcul de l'énergie de glissement lorsque l'arrêt du glissement a été établi.

12. Agencement pour l'indication d'un glissement dans un embrayage à friction à commande manuelle (21), dans un véhicule ayant une boîte de vitesse mécanique à commande manuelle (23), comprenant :

   a) un dispositif pour calculer une valeur représentant l'énergie produite dans l'embrayage (21) en fonction d'une expression concernant le couple du moteur (20) et le glissement de l'embrayage ; et

   b) des dispositifs (9, 12) pour générer un signal attirant l'attention lorsque l'énergie produite calculée excède un certain niveau prédéterminé ;

**caractérisé par**

c) un dispositif de calcul (5) pour calculer d'une manière au moins essentiellement continue la relation entre la vitesse du moteur (3, 4) et la vitesse du véhicule (1, 2) ;

d) des dispositifs (5, 6, 8) enregistrant les variations dans le temps de la valeur de cette relation ;

e) des dispositifs (9, 12) établissant la survenue ou la non survenue d'un glissement de l'embrayage à partir des valeurs de cette relation ;

f) un dispositif (8) comparant les valeurs de ladite relation à des valeurs mémorisées dans une mémoire (7), qui représentent différents changements de rapport dans la boîte de vitesse (23), pour estimer quel rapport est engagé dans la boîte de vitesse (23),

g) un dispositif estimant la vitesse de la partie aval de l'embrayage à partir de valeurs représentant la vitesse du véhicule (3, 4) et le rapport engagé, et estimant l'énergie transmise par la ligne de transmission du véhicule ;

h) un autre dispositif calculant l'énergie délivrée par le moteur (20) à partir de valeurs instantanées représentant le couple du moteur (10, 11) et la vitesse du moteur (3, 4) pendant le glissement de l'embrayage, et

i) un autre dispositif calculant l'énergie de glissement comme la différence entre l'énergie délivrée par le moteur et l'énergie transmise par la ligne de transmission du véhicule.

13. Agencement selon la revendication 12, **caractérisé par** une mémoire (13) mémorisant des informations sur l'énergie produite dans l'embrayage.

14. Agencement selon l'une quelconque des revendications 12 ou 13, **caractérisé par** un dispositif (12) émettant le signal attirant l'attention après l'arrêt du glissement de l'embrayage.

15. Agencement selon l'une quelconque des revendications 12 à 14, **caractérisé par** un dispositif émettant le signal attirant l'attention (12) pendant la survenue du glissement de l'embrayage.

16. Véhicule à moteur Diesel, ayant un embrayage à commande manuelle et une boîte de vitesse mécanique, **caractérisé par** l'incorporation d'un agencement selon l'une quelconque des revendications 12 à 15.

FIG 1a

FIG 1b

FIG 2